# EUROPEAN PATENT SPECIFICATION

(11) **EP 0 434 926 B1**
(45) Date of publication and mention of the grant of the patent: **23.08.1995**
(21) Application number: 90120680.5
(22) Date of filing: 29.10.1990
(51) Int. Cl.: G05D 23/19

(54) **A programmable thermostat with a temperature display**
Programmierbarer Thermostat mit Temperatuanzeige
Thermostat programmable avec affichage de température

(30) Priority: 29.12.1989 IT 3078889 U
(43) Date of publication of application: 03.07.1991
(73) Proprietor: B.P.T. S.p.A., I-30020 Cinto Caomaggiore (Venezia) (IT)
(72) Inventor: Simonin, Dino, I-33075 Morsano al Tagliamento (IT)
(74) Representative: Perani, Aurelio

(56) References cited:
- DE-A- 2 946 948
- DE-A- 3 438 196
- FR-A- 2 496 925
- US-A- 4 213 562
- US-A- 4 298 163

## Description

This invention relates to a programmable thermostat according to the preamble of claim 1. A thermostat including the above features is known from DE-A-2 946 948. This document discloses a programmable thermostat which can be programmed with an individually set temperature level for each hour of the day. The programmed levels are set by means of cursors movable on respective parallel slots positioned adjacent to each other, thereby obtaining a graph the pattern of the temperature levels set for the period. It is to be noted that the level of the temperature (i.e. the value of the temperature at a determined hour) can be programmed but not the value (i.e. the value of the temperature corresponding to a specific position of the cursor) thereof. The value of the temperature corresponding to the position of the cursor is univocally determined by the manufacturer of the thermostat and cannot be subsequently adjusted by the user. The scale of temperatures associated to the cursors of D1 is linear. This leads to smooth any little difference between the temperature levels set.
Another type of currently known thermostats enable two temperature levels, adjustable at the user's choice, to be programmed, such as a so-called saving level wherein a relatively low temperature is set for those moments when the controlled room(s) is unoccupied or at least requires no high heating levels (e.g. during night time), and a so-called comfort level, wherein a higher temperature level than the former is set.

Both these programmable temperature levels are indicated by graphic symbols, usually segments, on a display of the thermostat.

In addition, thermostats are usually programmed by the manufacturer to provide a third, so-called anti-freeze, temperature setting, as a rule significantly lower than the former levels, which is intended to control the heating for the rooms placed under the influence range of the thermostat within suitable limits to protect the systems installed therein, in particular the water systems, against freezing. This third temperature level cannot be set by the user and is not displayed on the thermostat display.

The first time period considered in the most widely used thermostats is the day, as subdivided into twenty four hours, by each of which the user can set either of the two programmable levels.

The displaying, or the thermostat, of the two temperature settings enables the user to perceive when a drop or rise in temperature is to occur within the room considered. However, this provides no immediate perception of the expected temperature pattern in the room over the set time period.

The object of this invention is to provide a programmable thermostat so structured as to overcome the above inconvenients found with the thermostats of the cited prior art.

This object is achieved by the invention through a thermostat according to claim 1.

The features and advantages of the invention will be more apparent from the following detailed description of a preferred embodiment given by way of example and not of limitation with reference to the accompanying drawings, where:

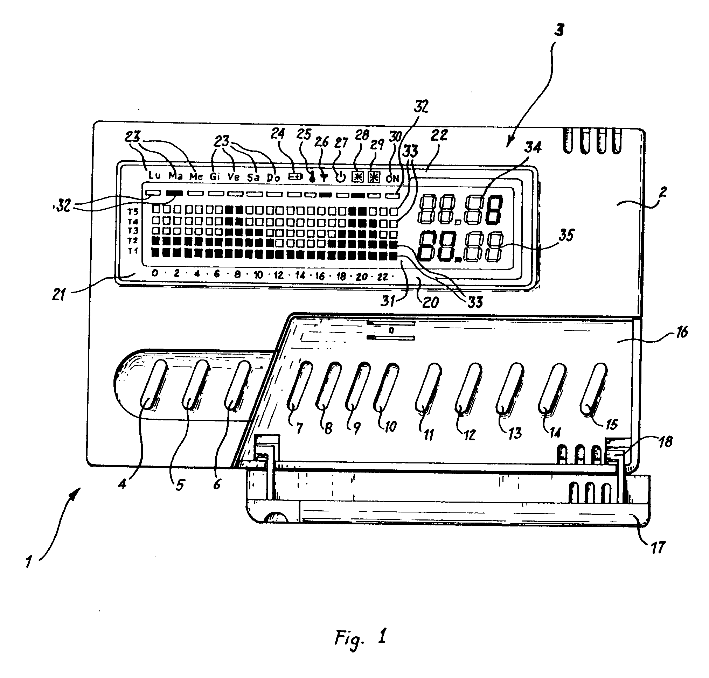

Figure 1 is a front elevation view of a programmable thermostat embodying this invention.

In the drawing figure, generally shown at 1 is a programmable thermostat including a case 2 on the front surface whereof a display 3 is mounted.

On that same front surface, beneath the display 3, there are a series of twelve keys, progressively numbered 4 to 15, for a function to be explained.

The keys 7 to 15 are mounted at a recess 16 of the case 2, whereto access can be had by means of a small door 17 swingable about pivots 18.

The circuitry of the thermostat 1, which is contained within the case 2, is not shown because unrelated to the subject-matter of this invention; it comprises, anyhow, a programmable system, of a conventional type well known to the skilled one, which can drive the display 3 as explained hereinafter, besides driving, of course, the typical functions of a thermostat, partly to be discussed further herein.

The display 3 has a longitudinal bottom edge 20 which is stamped with an hourly time scale, subdivided into the twenty four hours of a day, a vertical edge 21 (right-hand side in the drawing) which is stamped with five graphic symbols on top of one another, as indicated at T1-T5 in the drawing, each provided to indicate a corresponding temperature level growing in value from symbol T1 to symbol T5, and a top longitudinal edge 22 which is stamped with more graphic symbols, among which seven symbols, collectively indicated at 23 and adapted to denote the days of the week and seven symbols, carrying the reference numerals from 24 to 30, the meanings whereof will be explained hereinafter.

Said edges and their symbols frame an operation surface 31 of the display 3, e.g. of the liquid crystal or equivalent type, which includes a line of segments collectively indicated at 32 and being located each at the location of a respective symbol shown on the top edge 22, a grid of blocks collectively indicated at 33 and corresponding, for each hourly range shown on the bottom edge 20, with every corresponding temperature level symbol T1-T5 on the edge 21, and two four-digit displays, respectively indicated at 34 and 35.

The display 34 is associated with a digital clock belonging to the circuitry of the thermostat 1, which can be regulated by depressing the key 7, while the display 35 is effective both to display the actual temperature measured in the room where the thermostat 1 is located and, by switch over on depressing the key 15, and the temperature setting for the current hour. The type of measurement being taken will be displayed on activating the segment 32 respectively associated with the symbols 25 and 26.

The segment 32 associated with the symbol 24 is activated when the power supply to the thermostat 1 is insufficient to ensure proper operation of the same, e.g. due to depletion of the batteries provided for the purpose.

The segment 32 associated with the symbol 27 is activated when, on depressing the key 9, the ability of the thermostat 1 to output commands is inhibited, that is when the thermostat is cut off from the electric circuit that it controls.

The segments 32 associated with the symbols 28 and 29 show respectively the thermostat operation in the summer- and wintertime modes. This reversal of operation can be changed over by depressing the key 10.

Lastly, the segment 32 associated with the symbol 30 will show the thermostat activation on the latter being tripped to permit its associated electric circuit to be activated.

The corresponding temperature value corresponding with each of the levels T1-T5 is programmable by the user on depressing the key 8 together with one of the keys 5, 6, respectively to raise or lower the basic temperature level displayed on the display 35.

To set a temperature program varying between the levels T1 and T5 during the twenty four hours of one day of the week, one first selects the day of interest by depressing the key 13. The setting is automatically active for the current hour, as picked up from the clock incorporated to the display 34; the hour time considered may be changed by depressing one of the keys 11, 12, respectively to increase or decrease it. Once this selection is made, one proceeds with the setting of the temperature level sought for the time in question, by depressing the keys 5 or 6 to respectively raise the temperature level or lower it.

In a corresponding way, all the blocks 33 corresponding with the selected hour and with temperature levels equal to or lower than the set level, are activated. For example, the display of Figure 1 for Tuesday, from 7 to 8 hours, is set at the temperature level T5, which involves activation of all the blocks corresponding with the levels T1-T5 for the same time. This not only allows the temperature settings to be viewed but also affords immediate perception in the form of a graph consistent with the temperature pattern at the different hours of the selected day.

After setting the temperature pattern selected for all the hours of a given day, the same setting may be copied for another day by depressing the key 14.

If desired, the programmed operation may be temporarily excluded to revert the thermostat 1 to manual operation by depressing the key 4.

The main advantage of the thermostat of this invention is the particular configuration of the display and the possibility to program and display at least three temperature levels within the selected time period, which makes for immediate perception of the set thermal pattern by displaying sort of a graph of the selected temperatures to assist the user both in programming and making optimum use of the thermostat.

## Claims

1. A programmable thermostat to be programmed by the setting of predetermined temperature levels (T1-T5) during at least a first time period, which time period may be further divided into time subdivisions, and including a display (3) of which a portion is set up to display the temperature level settings at the time subdivisions of said first period, said display including at least one temperature setting indicator for each subdivision of the period, said indicators being positioned on said display so as to show in the form of a graph the pattern of said temperature level settings for the period, characterised in that said display includes a matrix of visually activable symbols (33), said matrix having columns of symbols corresponding to each of the time subdivisions of the period and lines of symbols corresponding to each of said temperature levels (T1-T5), the activated symbols of each column defining the corresponding indicator, wherein each column includes at least three symbols (33) each one associated with a corresponding temperature level (T1-T5), said temperature levels being programmable with temperature values increasing with the spacing of the corresponding symbol relatively to a bottom edge (20) of the display (3) and said symbols being visually activated so as to display the temperature level settings (T1-T5) during the period in the form of a graph consistent with the pattern of said temperature level settings during the period, the said temperature settings being made by selection from the said temperature levels (T1-T5) for each of said time subdivisions.

2. A thermostat according to claim 1, wherein said symbols (33) are visually activable so as to display said graph in the form of a histogram.

## Patentansprüche

1. Programmierbarer Thermostat, der durch das Einstellen von vorbestimmten Temperaturpegeln (T₁-T₅) während wenigstens einer ersten Zeitdauer programmierbar ist, die in weitere Zeit-Untereinheiten eingeteilt sein kann, und eine Anzeige (3) aufweist, von der ein Teil die Temperaturpegeleinstellungen zu den Zeit-Untereinheiten der ersten Zeitdauer anzeigt, wobei die Anzeige wenigstens einen Temperatur-Einstellungsanzeiger für jede Unterteilung der Zeitdauer aufweist, wobei die Anzeiger so auf der Anzeige positioniert sind, daß sie in Form einer graphischen Darstellung das Muster der Temperaturpegeleinstellungen für die Zeitdauer anzeigen,
**dadurch gekennzeichnet**,
daß die Anzeige eine Matrix von optisch aktiven Symbolen (33) aufweist, wobei die Matrix Symbolspalten aufweist, die jeweils einer Zeitunterteilung der Periode entsprechen, und Symbolzeilen, die jeweils den Temperaturpegeln (T₁ - T₅) entsprechen, wobei die aktivierten Symbole jeder Spalte den entsprechenden Anzeiger festlegen, wobei jede Reihe wenigstens drei Symbole (33) aufweist, die jeweils einem entsprechenden Temperaturpegel (T₁ - T₅) zugeordnet sind, wobei die Temperaturpegel mit Temperaturwerten programmierbar sind, die mit dem Abstand des entsprechenden Symbols bezüglich einer Bodenkante (20) der Anzeige (3) zunehmen, und die Symbole optisch aktiviert werden, um die Temperaturpegeleinstellungen (T₁ - T₅) während der Zeitdauer in Form eines Graphen anzeigen, der mit dem Muster der Temperaturpegeleinstellungen während der Zeitdauer übereinstimmt, wobei die Temperatureinstellungen durch Wahl der Temperaturpegel (T₁ - T₅) für jede der Zeitunterteilungen erfolgen.

2. Thermostat nach Anspruch 1,
bei dem die Symbole (33) zur Anzeige des Graphen in Form eines Histogramms optisch aktivierbar sind.

## Revendications

1. Thermostat programmable devant être programmé par le réglage de niveaux prédéterminés de température (T1 à T5) pendant au moins une première période de temps qui peut être divisée, de plus, en subdivisions de temps, et comprenant un affichage (3) dont une partie est prévue pour afficher les réglages de niveau de température selon les subdivisions du temps de ladite première période, ledit affichage comprenant au moins un indicateur de réglage de température pour chaque subdivision de la période, lesdits indicateurs étant placés sur ledit affichage afin de présenter, sous la forme d'un graphe, la configuration desdits réglages du niveau de température pour la période,
thermostat caractérisé en ce que ledit affichage comprend une matrice de symboles (33) pouvant être activée de façon visuelle, ladite matrice possédant des colonnes de symboles correspondant à chacune des subdivisions de temps de la période et des lignes de symboles correspondant à chacun desdits niveaux de température (T1 à T5), les symboles activés de chaque colonne définissant l'indicateur correspondant, matrice dans laquelle chaque colonne comprend au moins trois symboles (33) associés chacun à un niveau correspondant de température (T1 à T5), lesdits niveaux de température pouvant être programmés selon des valeurs de température croissantes selon l'espacement du symbole correspondant par rapport à un bord inférieur (20) de l'affichage (3) et lesdits symboles étant activés, de façon visuelle, de façon à afficher les réglages du niveau de température (T1 à T5) lors de la période sous la forme d'un graphe concernant la configuration desdits réglages du niveau de température lors de la période, lesdits réglages de température étant effectués par sélection à partir desdits niveaux de température (T1 à T5) pour chacune desdites subdivisions de temps.

2. Thermostat selon la revendication 1, dans lequel lesdits symboles (33) peuvent être activés, de façon visuelle, de façon à afficher ledit graphe sous la forme d'un histogramme.
